# EUROPEAN PATENT SPECIFICATION

(11) **EP 2 708 137 B1**
(45) Date of publication and mention of the grant of the patent: **07.01.2015**
(21) Application number: 13182469.0
(22) Date of filing: 30.08.2013
(51) Int. Cl.: A22C 11/02

(54) **Twisting apparatus**
Verdrillvorrichtung
Dispositif de torsadage

(30) Priority: 14.09.2012 IT VR20120186
(43) Date of publication of application: 19.03.2014
(73) Proprietor: RISCO S.p.A., I-36016 Thiene (VI) (IT)
(72) Inventor: Righele, Giampietro, 36016 Thiene (VI) (IT); Toniello, Filippo, 36016 Thiene (VI) (IT)
(74) Representative: Manfrin, Marta

(56) References cited:
- EP-A1- 0 247 462
- EP-A1- 1 588 621
- DE-A1- 10 015 893
- US-A1- 2012 175 015

## Description

The present disclosure relates in general to the sector of twisting machines or apparatus intended, for example, to twist food products with a paste-like consistency such as minced meat, an emulsified product, a cold cut product or the like.

Even more particularly, the present disclosure relates to a twisting apparatus of the type including a filling cone or pipe. The filling cone has a free end on which a casing is positioned, so that the food product may be filled inside the casing. After positioning of the casing, the free end of the filling cone is adapted to be connected to a braking device which holds the casing and keeps it in a tensioned condition for allowing loading or filling of the food product in order to form an encased product. At regular intervals a twisting device causes rotation of the filling cone so as to perform twisting of the casing (held fast by the braking device) and division of the encased food product into segments or parts.

US 2012/175015 discloses a twisting apparatus comprising a loading device intended to load a food product in a casing and a braking device, wherein a loading path of the food product extending from the loading device to the braking device is defined in said twisting apparatus, wherein the loading device comprises a tubular filing body or filling cone intended to support the casing, wherein the filling cone is adapted to be connected to the braking device in a first operative position for holding the casing and wherein the filling cone is further adapted to assume at least one angled position, wherein in said angled position said angled filling cone is angularly displaced around an axis of rotation with respect to the braking device and located on one side of at least a portion of said loading path.

The present disclosure is based on the observation by the inventor of the present patent application that, in order to load the casing onto the free end of the filling cone, the twisting systems proposed hitherto include a movable braking device, namely a device displaceable away from the filling cone, in order to access the free end of the filling cone during loading of the casing. The known twisting systems, however, involve constructional complications in order to ensure the mobility of any other processing apparatus associated with the braking device, such as belt or chain systems for conveying the product output downstream of the braking system. Based on this observation, in order to overcome the problem of the complexity and the poor productive efficiency of these systems, a twisting apparatus such as that defined in the independent claim 1 and a method according to claim 10 are provided. Secondary characteristic features of the subject of the present disclosure are defined in the corresponding dependent claims.

In particular, according to some aspects of the present disclosure, the braking device is fixed or removable, and the filling cone is adapted to assume at least one angled position in which the filling cone is in a spaced relationship or detached from the braking device. In particular, the angled position is a position angularly displaced, about an axis of rotation, with respect to the braking device. In said angled position, the filling cone is located on one side of a portion of a loading path of the food product, namely the filling cone is displaced from a zone where a loading path of the food product is present. Consequently, in order to load the casing on the filling cone, an operator may displace or position the filling cone in the angled position, causing the filling cone to project on one side of the twisting apparatus, without having to displace other apparatus or without having to perform operations within the volume of the twisting apparatus. The casing can be loaded on the filling cone away or far from the loading path of the food product.

For example, in some embodiments, the angled position is a position which, when the apparatus is viewed in plan view or from an upper zone, the filling cone is angularly displaced about an axis of rotation to one side, with respect to said braking device, or said portion of the loading path. Consequently the filling cone may be displaced towards a user or an operator who is situated on one side of the twisting apparatus.

In other embodiments, the filling cone is displaced angularly upwards or downwards with respect to the braking device. In other words, the filling cone may be displaced angularly in a vertical plane or in a diagonal or oblique plane.

According to the present disclosure, the filling cone is adapted to assume at least one further operative position, different from said angled position, in which the filling cone is connected to the braking device. Basically, the filling cone is adapted to pass from an operative position for loading the product, in which the filling cone is connected to the braking device, to the angled position, and vice versa. In this first operative position, the filling cone is coaxial with or in a position coinciding with said at least one portion of the loading path. Consequently the angled position may be easily reached from the first operative position and does not interfere with a step for loading or feeding the product.

According to the invention, the filling cone occupies a first portion of the loading path in the first operative position. The loading path also comprises at least a second portion of the loading path different from the first portion, wherein the second portion forms an angle with the first portion and is coaxial with the axis of rotation of the filling cone. Basically, the filling cone is adapted to rotate about an axis coinciding with said second portion of the loading path. In other words, the filling cone is adapted to rotate about an axis which at least partly coincides with a portion of the product loading path. Consequently, the loading path is at least partially sinusoidal-shaped, wherein a portion of the path is located along a first loading axis and wherein another portion of the path is located on a second loading axis, said second loading axis coinciding with an axis of rotation of the filling cone.

As a result, it is possible to optimize the volumes and the overall dimensions of the twisting apparatus, since the rotating structure of the apparatus coincides with part of the structure intended to form the loading path or channel of the food product.

More particularly, according to the invention, the twisting apparatus comprises a support structure for supporting the filling cone, which is located upstream of the twisting device, such that the latter is located between the support structure and the filling cone. In the angled position, the filling cone is displaced together with said twisting device and said support structure. Consequently, in order to rotate the filling cone into the angled position, the assembly formed by the support structure and the twisting device is displaced.

More particularly, the support structure includes a pivot portion, said pivot portion being arranged to rotate in a rotational seat of a support base.

It is pointed out that in some embodiments the support structure houses at least a portion of the product loading path. More particularly, an inlet conduit for the food product is in communication with an internal cavity of the support structure and engages with the support structure coaxially with the axis of rotation. Consequently, a rotation of the assembly formed by the support structure, the twisting device and the filling cone does not hinder the food product feeding or loading path nor results in variations of the food product loading path.

Even more particularly, in accordance with some embodiments of the present disclosure, the loading device includes a passage duct placed in fluid communication between the filling cone and the support structure. When the filling cone is in the first operative position, an inlet mouth of the passage duct is aligned along an axis with an inlet conduit for the food product in the twisting apparatus. Further advantages, characteristic features and the modes of use of the subject of the present disclosure will become clear from the following detailed description of a number preferred embodiments thereof, provided solely by way of a non-limiting example. It is clear, however, that each embodiment may have one or more of the advantages listed above; in any case it is not required that each embodiment should have simultaneously all the advantages listed.

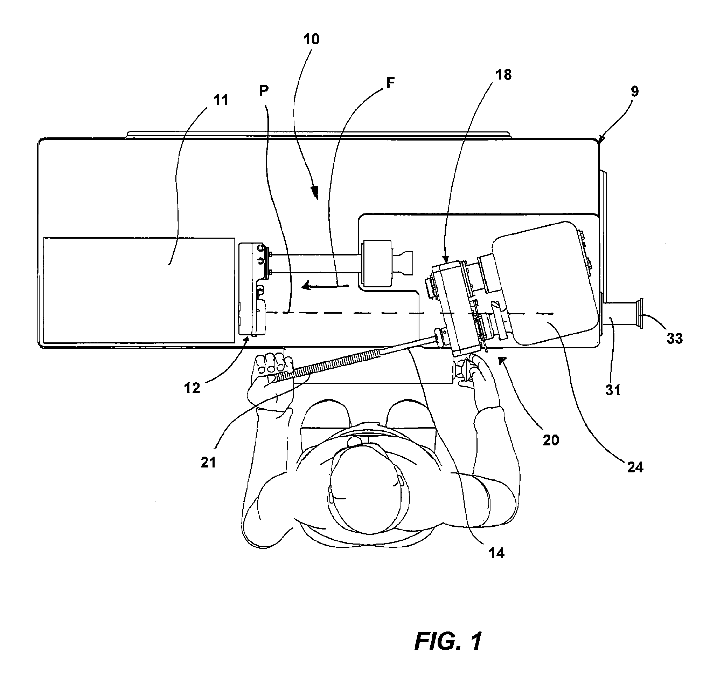

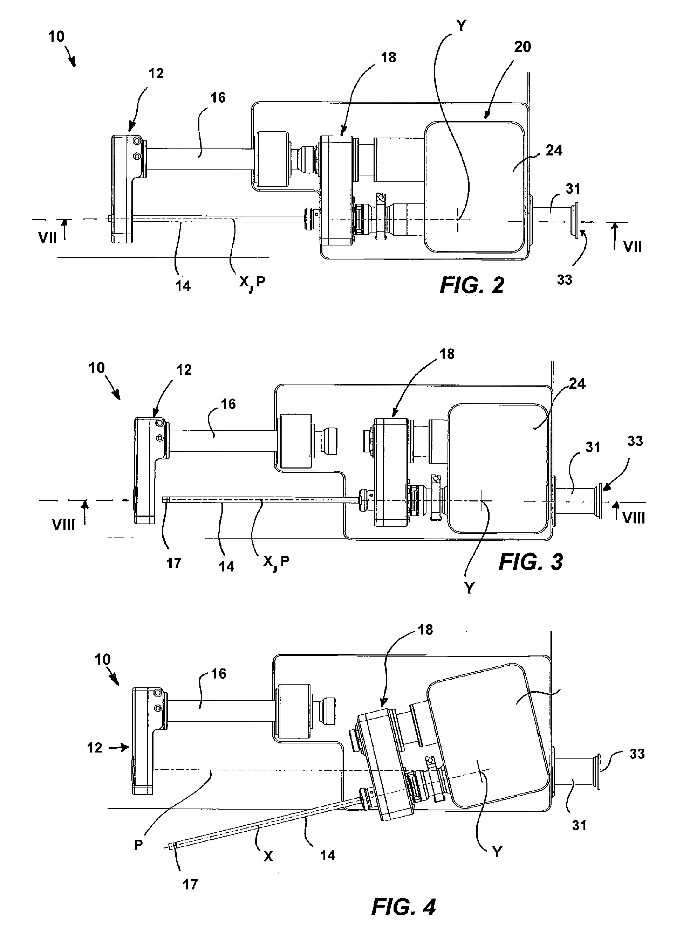

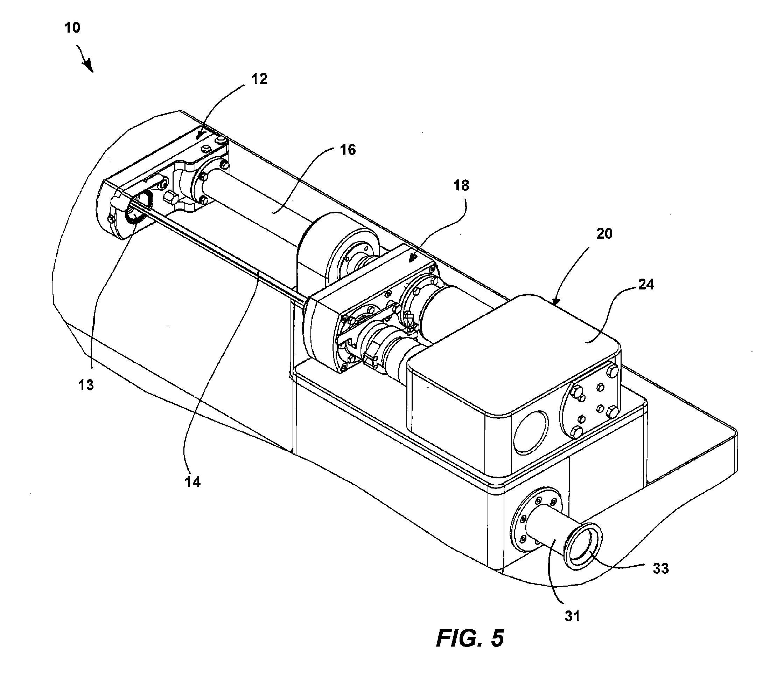

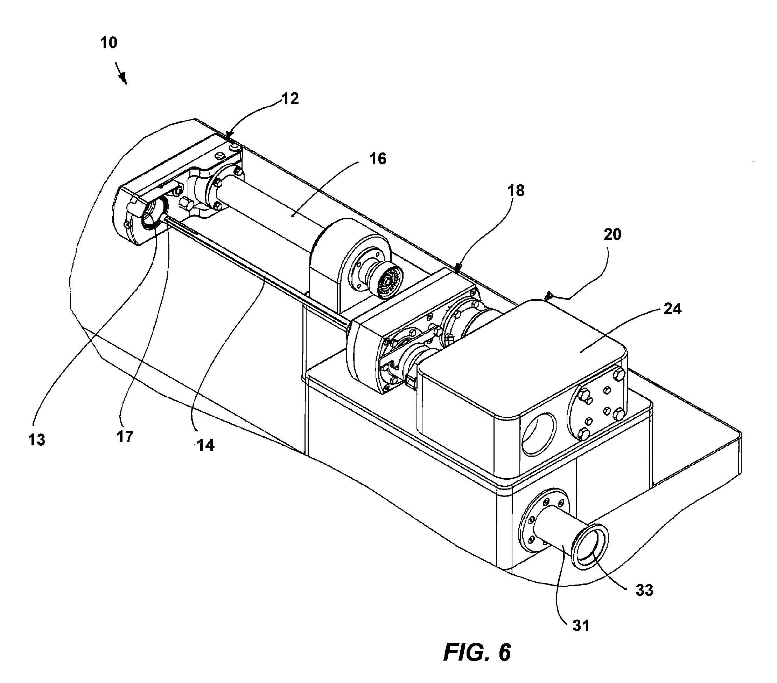

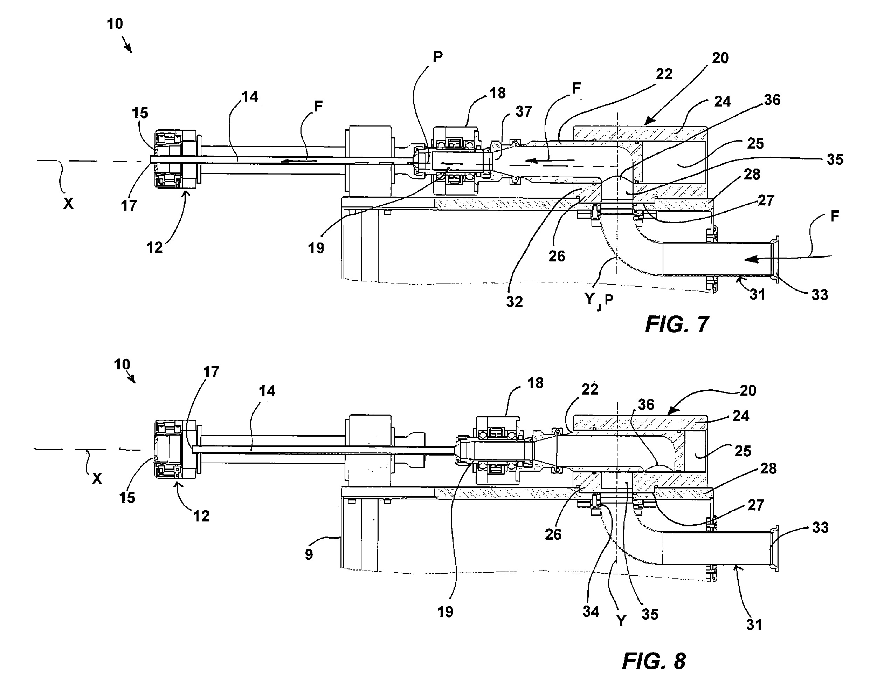

Reference shall be made to the figures in the accompanying drawings in which:-Figure 1 shows a view from above or plan view of a twisting apparatus according to an embodiment of the present disclosure; - Figures 2-4 shows views from above of a twisting apparatus according to an embodiment of the present disclosure in respective operative positions; - Figure 5 shows an axonometric view of a twisting apparatus according to an embodiment of the present disclosure in a first operative position; - Figure 6 shows an axonometric view of a twisting apparatus according to an embodiment of the present disclosure in a second operative position; - Figure 7 shows a cross-sectional view along the line VII-VII of Figure 2; - Figure 8 shows a cross-sectional view along the line VIII-VIII of Figure 3.

With reference to the accompanying figures, the reference number 10 denotes a twisting apparatus according to the present disclosure.

The twisting apparatus 10 comprises a frame 9, or support structure, and a loading device 20 for a food product, mounted on the frame 9. The food product is not shown in the drawings and may be, for example, a product based on minced meat or otherwise, or a product in the form of a paste, intended to be loaded or filled inside a casing 21. The casing 21 is schematically shown in Figure 1 in the curled-up condition.

The twisting apparatus 10 may be associated, on one side, with a filling device which feeds the product towards the twisting apparatus 10. On another side, the twisting apparatus 10 may be associated with a processing apparatus 11, where the food product is filled inside the casing 21 so as to form an "encased" food product. The processing apparatus 11 may have any form and function and does not form part of the present disclosure.

The food product, which is supplied from the filling machine and reaches the processing apparatus 11 passing through the twisting apparatus 10, defines a loading path P for the food product, which is in the direction of advancing movement of the food product. The direction of advancing movement is indicated by the arrow F in Figure 1 and in Figure 7. In connection with the present disclosure, each spatial reference, such as "alongside", "on one side", "upstream", "downstream", "horizontal" or "vertical", "above" or "below", "bottom" "retracted" or "advanced", or similar spatial references, are to be understood as referring by way of example to the twisting apparatus as arranged in Figures 1 and 7, when in operation, and located in a base plane, where the loading path P and the direction of advancing movement of the food product may be identified.

The loading device 20 includes a filling cone or pipe 14 which, during operation, is a pipe extending along a longitudinal axis X coaxial with at least a portion of the loading path P, for filling the food product inside the casing 21.

In a normal and conventional operative condition, the longitudinal axis X is a horizontal axis. The food product is intended to pass inside the filling pipe or cone 14.

The filling cone 14 is mounted on a twisting device 18 which allows the filling cone 14 to rotate about its longitudinal axis X so as to perform twisting of the casing 21 when the casing 21 is mounted on a free end 17 of the filling cone 14. The twisting device 18 is of the type known in the sector and comprises a rotating actuating member connected by means of a belt or similar movement transmission device for transmitting a transmission movement to the filling cone 14. The filling cone 14 is in particular fixed to a tubular body 19 of the twisting device 18 which is connected to the actuating member. The food product is intended to pass inside the tubular body 19.

The twisting apparatus 10 also comprises a braking device 12 of the type known to a person skilled in the art, which is connected to the loading device 20 by means of a rigid arm 16. The braking device 12 is provided with a bush 15, called brake, adapted to hold fast the casing 21 and produce a tension necessary for optimum filling of the product inside the said casing 21. The braking device 12 is provided with an opening 13 for receiving the free end portion 17 of the filling cone 14. The connection between the loading device 20 and the braking device 12 via the arm 16 is also of the type known to a person skilled in the art.

According to an aspect of the present disclosure, the filling cone 14 is adapted to assume at least one angled position in which the filling cone 14 is in a spaced relationship or detached from the braking device, said filling cone 14 in this position being angularly displaced on one side of said loading path P.

In particular, in the angled position, when the twisting apparatus 10 is viewed in plan view or from an upper zone, the filling cone 14 is angularly displaced about an axis of rotation Y to one side, with respect to said braking device 12 or said loading path P.

Even more particularly, the axis of rotation Y is perpendicular to at least a portion of the product loading path P coinciding with the axis X or with the path of the food product inside the filling cone 14.

More particularly, according to aspects of the present disclosure, the filling cone 14 may assume at least three operative positions different from each other. By way of example, a first loading operative position is visible in Figure 2, Figure 5 and Figure 7 and corresponds to a position in which the food product is loaded into the casing 21. In this first operative position, the filling cone 14 is arranged along a first portion of the loading path P, or along the axis X, and has a respective free end portion 17 which is housed inside the opening 13 of the braking device 12.

A second operative position is visible, by way of example, in Figure 3, Figure 6 and Figure 8 and corresponds to a position in which the aforementioned free end section 17 of the filling cone 14 is spaced from the braking device 12. In this operative condition, the casing 21 may be mounted on the filling cone 14, without interfering with the braking device 12. In this second operative position, the filling cone 14 has its respective free end portion 17 spaced from the opening 13 of the braking device 12. More particularly, in this second operative position, the filling cone 14 is aligned with the opening 13 of the braking device 12 in a position which is linearly retracted with respect to the first operative position, towards an upstream zone of the braking device 12.

A third operative position, which is visible in Figure 1 and Figure 4, corresponds to the aforementioned angled position in which the filling cone 14 is displaced laterally towards an operator, and the casing 21 may be mounted on the filling cone 14 substantially outside of the volume or general shape of the twisting apparatus 10. In this third operative position, the filling cone 14 has its respective free end portion 17 spaced from the opening 13 of the braking device 12. More particularly, in this third operative position, the filling cone 14 is angularly displaced, or out of alignment, with respect to the opening 13 of the braking device 12, in a position which is retracted with respect to the first operative position and angularly displaced in a lateral direction, with respect to the path P. The angled position or third (laterally displaced) operative position may allow an operator to perform operations outside of the volume of the twisting apparatus 10 and not have to work within a confined spaced between the components of the twisting apparatus 10. Moreover, no displacement of the braking device 12 is required.

Moreover, according to some aspects of the present disclosure, the filling cone 14 is displaced without performing any modifications or variations of the internal volume of the filling cone 14. In other words, the filling cone 14 is adapted to be displaced from the first position into the second position and vice versa, or vice versa, or from the first position to the third position and vice versa, or from the second position to the third position, and vice versa, in a rigid manner, namely maintaining an internal volume which is unvaried during the passage from one position to another. Even more particularly, according to the present disclosure, the filling cone 14 is a rigid body adapted to be displaced entirely without modification of its internal volume. Consequently, in order to load the casing 21 on the filling cone 14, the filling cone 14 may be displaced in a practical manner, thereby facilitating the operations for an operator. At the same time, owing to the fact that its internal volume remains unvaried, there is no leakage of food product from the filling cone 14.

According to an embodiment of the present disclosure, such as that visible in the accompanying figures, the loading device 20 comprises, in addition to the twisting device 18, a passage duct 22 mounted upstream of the twisting device 18 and a case-shaped support structure 24 which is adapted to support the passage duct 22. In particular, the passage duct 22 is fixed to the twisting device 18 and to the tubular body 19 defined above so as to allow the introduction of the product into the tubular body 19 and then into filling cone 14. The passage duct 22 is in particular connected to the twisting device 10 and to the tubular body 19 so as to be able to translate integrally and rigidly with the twisting device 18 and the tubular body 19. At the same time the tubular body 19 is connected idle to the passage duct 22 so that a rotation about the longitudinal axis X of the tubular body 19 and the filling cone 14 is not transmitted to the passage duct 22.

According to an embodiment of the present disclosure, such as that visible in the accompanying figures, the filling cone 14 can be displaced together with the twisting device 18 and the passage duct 22 with respect to the support structure and with respect to the frame 9 from the first position into the second position and vice versa. Even more particularly, the support structure 24 comprises an internal cavity 25 which is adapted to receive the passage duct 22 when the filling cone 14 is in the second operative position. This configuration allows displacement of the filling cone 14 from the first operative position into the second operative position such as to maintain a substantially constant or in some cases smaller volume of the entire twisting apparatus 10. In fact, the passage duct 22, in the second operative position, occupies a free zone (cavity 25) inside the support structure 24 so as not to occupy additional spaces and allow the entire twisting apparatus 10 to be kept within the maximum dimensions.

According to an embodiment of the present disclosure, such as that visible in the accompanying figures, the filling cone 14 can be displaced together with the twisting device 18 and the passage duct 22 and the support structure 24 from the second position to the third position and vice versa, namely can be displaced from a position aligned with the braking device 12 into a position angularly displaced with respect to the braking device 12. Even more particularly, for this purpose, the support structure 24 has a pivot portion 26 projecting downwards from a bottom wall 32 which is arranged rotatably in a rotational seat 27 of a support base 28 of the frame 9. In other words, the support structure 24 is mounted rotatably about the axis Y. Rotation of the support structure 24 about this axis Y causes, as mentioned, angular displacement of the filling cone 14, the twisting device 18 and the passage duct 22 from the second position into the third position. Such an angular displacement is visible in Figure 4. It can be seen that in the third operative position the assembly formed by the filling cone 14, twisting device 18 and passage duct 22 allows the entire twisting apparatus 10 to maintain a substantially constant volume and moreover does not require disassembly of any component of the twisting apparatus 10 with respect to the frame 9.

Consequently, the passage duct 22 is translatable integrally with the filling cone 14 and with the entire twisting apparatus, in a linear and retractable manner, inside an cavity 25 of the support structure 24. This linear displacement or translation allows freeing of the end 17 of the filling cone 14 which is inserted inside the opening 13 of the braking device 12 and allows easy loading of the casing on said end 17 by an operator.

In particular, the filling cone 14 together with the passage duct 22 is displaced inside the cavity 25 of the support structure 24. In the embodiment shown the passage duct 22 is a tubular body and also the cavity 25 is substantially tubular.

According to an embodiment of the present disclosure, such as that visible in the accompanying figures, the twisting apparatus 10 comprises an inlet conduit 31 for introduction of the food product, said inlet conduit 31 being one piece or a component separate or detached from the passage duct 22. In particular, according to this embodiment, the inlet conduit 31 engages from below with respect to the support structure 24 so that product may be introduced from below into the passage duct 22.

In particular, the inlet conduit 31 is positioned below the base 28 and is in communication with the cavity 25 of the support structure 24. Even more particularly, the inlet conduit 31 engages with the support structure 24 along an axis (loading axis) which coincides, as will be described more fully below, with the aforementioned axis of rotation Y. In this connection it is pointed out that the bottom wall 32 of the support structure 24 has an opening 35 for placing the passage duct 22 in communication with the inlet conduit 31.

According to an embodiment of the present disclosure, such as that visible in the accompanying figures, the inlet conduit 31 is elbow-shaped with an inlet mouth 33 having a substantially horizontal axis and an outlet mouth 34 having a substantially vertical axis. The passage duct 22 is also elbow-shaped with an inlet mouth 36 having a substantially vertical axis and outlet mouth 37 having a substantially horizontal axis.

The inlet mouth 36 of the passage duct 22 and the outlet mouth 34 of the inlet conduit 31 are located in alignment with each other and so as to communicate with each other, via the aforementioned opening 35, when the filling cone 14 is located in at least one operative position and, in particular, for example, when the filling cone 14 is located in the first operative position.

Consequently, as can be seen from the drawings, in an embodiment such as that shown in the figures, the inlet conduit 31 and the passage duct 22, when connected together, define a channel for the passage of the food product from the filling machine to the processing apparatus 11, wherein the channel for the passage of the food product from the filling machine is at least partially sinusoidal-shaped.

Owing to the introduction, from below, of the food product into the passage duct 22 it is possible to obtain a twisting apparatus 10 in which the food product is introduced from below. This position of the inlet mouth 33 is fully compatible for connection with a filling machine.

According to a further aspect of the present disclosure, which can be seen for example in the embodiment shown in the figures, the inlet conduit 31 and the passage duct 22 have a respective vertical portion which is aligned along an axis with the loading axis Y, namely the vertical axis of rotation or pivot axis described above. Basically, as can be seen from Figures 7 and 8, the inlet conduit 31 and the passage duct 22 have a respective vertical portion which is coaxial with the pivot portion 26 of the support structure 24. Consequently, the support structure 24 is rotated from the second operative position into the third operative position, by rotating about the same loading axis Y along which the product is introduced from below.

It should be noted that the axes coincide at different times. In fact, the axis of rotation is adapted to coincide with said portion of the loading path P, when no food product is passing through, namely in a condition of absence of passing food product.

In other words, according to some aspects of the present disclosure, the loading path P envisages at least one first portion, coinciding with the axis X of the filling cone 14, namely coinciding with the first operative position of the filling cone 14, and at least one second portion, different from the first portion, where the second portion forms an angle with the first portion and is coaxial with the axis of rotation Y. Consequently the filling cone 14 is adapted to rotate about an axis coinciding with at least one portion (second portion) of the loading path P.

This configuration allows further compaction of the parts and limitation of the spaces and volumes of the twisting apparatus 10 as a whole. In fact, a rotation about the loading axis allows displacement of a limited number of parts or components for lateral displacement of the filling cone 14, by making use of the components or parts of the apparatus intended to form a loading path for the product. Moreover, as a result of this configuration, it is possible to obtain a twisting apparatus which is very compact, despite being able to assume a plurality of operative positions. Consequently, it is possible to rotate the entire loading device 20, including the twisting device 18, about the axis Y, namely about the loading axis or axis of engagement of the inlet conduit 31 inside the cavity 25 of the support structure 24. As already mentioned above, the possibility of rotating the entire loading device 20 about the axis Y offers the advantage of being able to displace laterally the filling cone 14, for example towards an operator, and also facilitating positioning of the casing on the filling cone 14, this manoeuvre being performed by means of a simple lateral rotation, with a reduced volume and reduced displacement of parts, while ensuring a high degree of compactness of the twisting apparatus 10.

A mode of operation of the twisting apparatus 10 may be substantially as described below.

Initially, in order to load a casing on the free end 17 of the filling cone 14 (in this condition the filling cone is set to the pause condition), the filling cone 14 and the passage duct 22 are displaced linearly inside the support structure 24. In this way, owing to the layout of the parts described above, the inlet mouth 36 of the passage duct 22 is not aligned with the axis of rotation Y, and the passage duct 22 closes the opening 35 of the support structure 24, without causing variations in the internal volume of the entire path of the food product.

Thereafter, the entire loading device 20 is angularly rotated about the axis of rotation Y so as to move the filling cone 14 into the vicinity of the operator who is situated on one side of the twisting system 10. In this way, the free end 17 can be accessed by the operator in order to perform the operations for insertion of the casing 21, and at the same time, the operator may operate the filling cone 14 without placing his/her hands directly inside the twisting apparatus 10. After loading the casing 21, the entire loading device 20 is positioned again in its original position (first operative position) with the filling cone 14 aligned and inserted inside the respective opening 13 of the braking device 12. In this condition, the braking device 12 stably retains the casing 21 on the filling cone 14 so as to ensure the necessary tension for optimum filling of the casing.

Then the filling device is started and the food product is introduced via the inlet conduit 31 so as to be introduced through the filling cone 14 into the casing 21. At periodic intervals or continuously the twisting device 18 is activated and causes rotation of the filling cone 14 so as to perform momentary twisting of the casing 21 once the required amount of product has been filled inside the casing.

The subject of the present disclosure has been described hitherto with reference to preferred embodiments thereof. It is understood that other embodiments relating to the same inventive idea may exist, all of these falling within the scope of protection of the claims which are appended hereinbelow.

## Claims

1. Twisting apparatus (10) comprising a loading device (20) intended to load a food product in a casing (21) and a braking device (12), wherein a loading path (P) of the food product extending from the loading device (20) to the braking device (12) is defined in said twisting apparatus (10), wherein the loading device (20) comprises a tubular filing body or filling cone (14) intended to support the casing (21), and a twisting device (18) intended to rotate said filling cone (14), wherein the filling cone (14) is adapted to be connected to the braking device (12) in a first operative position for holding the casing; and wherein the filling cone (14) is further adapted to assume at least one angled position, wherein in said angled position said angled filling cone (14) is angularly displaced around an axis of rotation (Y) with respect to the braking device (12) and located on one side of at least a portion of said loading path (P), **characterized in that**
the loading path (P) includes at least a first portion of the loading path and at least a second portion of the loading path (P) different from the first portion, wherein the filling cone (14) occupies said first portion of the loading path in said first operative position, and wherein the second portion defines an angle with the first portion and is coaxial with the axis of rotation (Y), such that the filling cone (14) is adapted to rotate about an axis coinciding with said second portion of the loading path (P),
**in that** said axis of rotation (Y) is arranged to coincide with said second portion of the loading path (P) in different operational time periods and/or in a condition of absence of food product, and
**in that** the loading device (20) comprises a support structure (24) for supporting the filling cone (14), and wherein the twisting device (18) is located between the support structure (24) and the filling cone (14), wherein, in said angled position, the filling cone (14) is displaced together with said twisting device (18) and said support structure (24).

2. Twisting apparatus (10) according to claim 1, wherein, in said angled position, when the apparatus (10) is viewed according to a plan view, or from an upper zone, the filling cone (14) is angularly displaced around said axis of rotation (Y) to one side, with respect to said braking device (12), or with respect to said at least a portion of the loading path (P).

3. Twisting apparatus according to one of the preceding claims, wherein said filling cone (14) is adapted to assume, in addition to said first operative position and said angled position, a second operative position, wherein said filling cone (14) is in a linearly retracted position with respect to the braking device (12), said second operative position being intermediate between said first operative position and said angled position.

4. Twisting apparatus (10) according to anyone of the preceding claims, wherein the support structure (24) includes a pivot portion (26), said pivot portion (26) being arranged to rotate about said axis of rotation (Y) in a rotational seat (27) of a support base (28).

5. Twisting apparatus (10) according to claim 4, wherein an inlet conduit (31) is in communication with a internal cavity (25) of the support structure (24), and engages with the support structure (24) coaxially with the axis of rotation (Y).

6. Twisting apparatus (10) according to claim 5, wherein the inlet conduit (31) engages in a lower zone, or from below, with respect to the support structure (24).

7. Twisting apparatus (10) according to claim 6, wherein the inlet conduit (31) is elbow-shaped with inlet mouth (33) arranged on a horizontal axis, and output mouth (34) arranged on a vertical axis, said output mouth (34) being adapted to be placed in communication with the filling cone (14).

8. Twisting apparatus (10) according to claim 7, wherein the loading device (20) includes a passage duct (22) placed in fluid communication between the filling cone (14) and the support structure (24), wherein, when the filling cone (14) is in the first position, an inlet mouth (36) of the passage duct (22) is aligned along an axis with the output mouth (34) of the inlet conduit (31), said axis coinciding with the axis of rotation (Y).

9. Twisting apparatus (10) according to any one of the preceding claims wherein said loading path (P) is at least partially sinusoidal-shaped, wherein a portion of the loading path (P) is located along a first loading axis and wherein another portion of the loading path (P) is located on a second loading axis, said second loading axis coinciding with the axis of rotation (Y) of the filling cone (14).

10. Method for twisting (10) via a loading device (20) intended to load a food product in a casing (21), wherein the food product moves along a loading path (P) from the loading device (20) to a braking device (12) designed to hold the casing (21), wherein the loading device (20) comprises a tubular filling body, or filling cone (14), intended to support the casing (21), a support structure (24) for supporting the filling cone (14) and a twisting device (18) intended to rotate said filling cone (14) and located between the support structure (24) and the filling cone (14), wherein
- in a first operative filling step the filling cone (14) is connected to the braking device (12) so as to load food product in the casing, wherein in said first operative step the food product passes along a loading axis (Y); and
- wherein, in a further operative step, the filling cone (14), said twisting device (18) and said support structure (24) are displaced angularly into an angled position about an axis of rotation (Y), said position being angled with respect to the braking device (12),
- wherein said axis of rotation (Y) of the filling cone (14) coincides with said loading axis (Y).

## Patentansprüche

1. Verdrillvorrichtung, umfassend eine Ladeeinrichtung (20), die ausgebildet ist, um ein Nahrungsmittelprodukt in eine Hülle (21) einzubringen und eine Bremseinrichtung (12), wobei ein Ladepfad (P) des Nahrungsmittelprodukts sich von der Ladeeinrichtung (20) zu der Bremseinrichtung (12) erstreckt, in der Verdrillvorrichtung (10) definiert ist, wobei die Ladeeinrichtung (20) einen rohrförmigen Füllkörper oder Füllkonus (14) zum Stützen der Hülle (21) und eine Verdrilleinrichtung (18) zum Rotieren des Füllkonus (14) umfasst, wobei der Füllkonus (14) ausgebildet ist, um mit der Bremseinrichtung (12) in einer ersten Arbeitsposition zum Halten der Hülle verbunden zu sein; und wobei der Füllkonus (14) zudem ausgebildet ist, um zumindest eine Winkelstellung einzunehmen, wobei in der Winkelstellung der gewinkelte Füllkonus (14) gewinkelt versetzt um eine Drehachse (Y) bezüglich der Bremseinrichtung (12) ist und an einer Seite von zumindest einem Abschnitt des Zuführpfades (P) angeordnet ist,
**dadurch gekennzeichnet,**
**dass** die Drehachse (Y) deckungsgleich mit dem zweiten Abschnitt des Zuführpfades (P) in verschiedenen Betriebszeitabschnitten und/oder in einem Zustand der Abwesenheit eines Nahrungsmittelprodukts angeordnet ist, und
**dass** die Ladeeinrichtung (20) eine Stützstruktur (24) zum Stützen des Füllkonus (14) umfasst, und wobei die Verdrilleinrichtung (18) zwischen der Stützstruktur (24) und dem Füllkonus (14) angeordnet ist, wobei in der Winkelstellung der Füllkonus (14) zusammen mit der Verdrilleinrichtung (18) und der Stützstruktur (24) versetzt ist, und der Zuführpfad (P) zumindest einen ersten Abschnitt des Zuführpfades und zumindest einen zweiten Abschnitt des Zuführpfades (P) enthält, der sich vom ersten Abschnitt unterscheidet, wobei der Füllkonus (14) den ersten Abschnitt des Zuführpfades in der ersten Betriebsstellung einnimmt und wobei der zweite Abschnitt einen Winkel mit dem ersten Abschnitt definiert und koaxial mit der Drehachse (Y) derart ist, dass der Füllkonus (14) ausgebildet ist, um um eine Achse zu drehen, die mit dem zweiten Abschnitt des Zuführpfades (P) übereinstimmt.

2. Verdrillvorrichtung gemäß Anspruch 1, wobei, in der Winkelstellung, wenn die Vorrichtung (10) gemäß einer Draufsicht oder von einem oberen Bereich betrachtet wird, der Füllkonus (14) mit Winkelversatz bezüglich der Drehachse (Y) zu einer Seite hin versetzt ist bezüglich der Bremseinrichtung (12) oder bezüglich zu dem zumindest einen Abschnitt des Zuführpfades (P).

3. Verdrillvorrichtung gemäß einem der vorstehenden Ansprüche, wobei der Füllkonus (14) ausgebildet ist, um zusätzlich zu der ersten Betriebsstellung und der Winkelstellung eine zweite Betriebsstellung einzunehmen, wobei der Füllkonus (14) in einer linear zurückgezogenen Position bezüglich der Bremseinrichtung (12) ist, wobei die zweite Betriebsposition eine Zwischenstellung zwischen der ersten Betriebsposition und der Winkelstellung ist.

4. Verdrillvorrichtung gemäß einem der vorstehenden Ansprüche, wobei die Stützstruktur (24) einen Drehabschnitt (26) beinhaltet, wobei der Drehabschnitt (26) angeordnet ist, um um die Drehachse (Y) in einem Drehsitz (27) einer Stützbasis (28) zu drehen.

5. Verdrillvorrichtung gemäß Anspruch 4, wobei ein Einlasskanal (31) kommunizierend mit einer internen Ausnehmung (25) der Stützstruktur (24) verbunden ist, und in Wirkverbindung mit der Stützstruktur (24) koaxial mit der Drehachse (Y) steht.

6. Verdrillvorrichtung gemäß Anspruch 5, wobei der Einlasskanal (31) in Wirkverbindung mit einem unteren Bereich, oder unten, bezüglich der Stützstruktur (24) steht.

7. Verdrillvorrichtung gemäß Anspruch 6, wobei der Einlasskanal (31) ellbogenförmig mit einer Einlassmündung (33) in einer horizontalen Achse angeordnet ist und eine Auslassmündung (34) in einer vertikalen Achse angeordnet ist, wobei die Auslassmündung (34) ausgebildet ist, um kommunizierend mit dem Füllkonus (14) angeordnet zu werden.

8. Verdrillvorrichtung gemäß Anspruch 7, wobei die Ladeeinrichtung (20) einen Durchgangskanal (22) beinhaltet, der fluidisch kommunizierend zwischen dem Füllkonus (14) und der Stützstruktur (24) angeordnet ist, wobei, wenn der Füllkonus (14) in der ersten Stellung ist, eine Einlassmündung (36) des Durchgangskanals (22) fluchtend entlang einer Achse mit der Auslassmündung (34) des Einlasskanals (31) angeordnet ist, wobei diese Achse deckungsgleich mit der Drehachse (Y) ist.

9. Verdrillvorrichtung gemäß einem der vorhergehenden Ansprüche, wobei der Ladepfad (P) zumindest teilweise sinusförmig geformt ist, wobei ein Abschnitt des Ladepfades entlang einer ersten Ladeachse (P) angeordnet ist und wobei ein anderer Abschnitt des Ladepfades (P) entlang einer zweiten Ladeachse angeordnet ist, wobei die zweite Ladeachse deckungsgleich mit der Drehachse (Y) des Füllkonus (14) ist.

10. Verfahren zum Verdrillen mittels einer Ladeeinrichtung (20) zum Laden eines Nahrungsmittelproduktes in eine Hülle (21), wobei sich das Nahrungsmittelprodukt entlang eines Ladepfades (P) von der Ladeeinrichtung (20) zu einer Bremseinrichtung (12) bewegt, die ausgebildet ist, die Hülle (21) zu halten, wobei die Ladeeinrichtung (20) einen rohrförmigen Füllkörper oder einen Füllkonus (14) umfasst, der ausgebildet ist, die Hülle (21) zu halten, eine Stützstruktur (24) zum Halten des Füllkonus (14) und eine Verdrilleinrichtung (18), die ausgebildet ist, den Füllkonus (14) zu drehen und zwischen der Stützstruktur (24) und dem Füllkonus (14) angeordnet ist, wobei
- in einem ersten Betriebsfüllschritt der Füllkonus (14) mit der Bremseinrichtung (12) derart verbunden ist, dass ein Nahrungsmittelprodukt der Hülle zuführbar ist, wobei in dem ersten Betriebsschritt das Nahrungsmittelprodukt entlang einer Ladeachse (Y) verläuft; und
- wobei in einem weiteren Betriebsschritt der Füllkonus (14) der Verdrilleinrichtung (18) und der Stützstruktur (24) im Winkel in eine abgewinkelte Position bezüglich einer Drehachse (Y) versetzt werden, wobei diese Position abgewinkelt bezüglich der Bremseinrichtung (12) ist,
- wobei die Drehachse (Y) des Füllkonus (14) deckungsgleich mit der Ladeachse (Y) ist.

## Revendications

1. Appareil de torsion (10) comprenant un dispositif de chargement (20) prévu pour charger un produit d'alimentation dans un boyau (21) et un dispositif de freinage (12), dans lequel une trajectoire de chargement (P) du produit alimentaire s'étendant à partir du dispositif de chargement (20) jusqu'au dispositif de freinage (12) est définie dans ledit appareil de torsion (10), dans lequel le dispositif de chargement (20) comprend un corps de remplissage tubulaire ou cône de remplissage (14) prévu pour supporter le boyau (21) et un dispositif de torsion (18) prévu pour faire tourner ledit cône de remplissage (14), dans lequel le cône de remplissage (14) est adapté pour être raccordé au dispositif de freinage (12) dans une première position opérationnelle pour supporter le boyau ; et dans lequel le cône de remplissage (14) est en outre adapté pour adopter au moins une position coudée, dans lequel, dans ladite position coudée, ledit cône de remplissage coudé (14) est déplacé de manière angulaire autour d'un axe de rotation (Y) par rapport au dispositif de freinage (12) et positionné d'un côté d'au moins une partie de ladite trajectoire de chargement (P), **caractérisé en ce que** :
la trajectoire de chargement (P) comprend au moins une première partie de la trajectoire de chargement et au moins une seconde partie de la trajectoire de chargement (P) différente de la première partie, dans lequel le cône de remplissage (14) occupe ladite première partie de la trajectoire de chargement dans ladite première position opérationnelle, et dans lequel la seconde partie définit un angle avec la première partie et est coaxiale avec l'axe de rotation (Y), de sorte que le cône de remplissage (14) est adapté pour tourner autour d'un axe coïncidant avec ladite seconde partie de la trajectoire de chargement (P),
**en ce que** :
ledit axe de rotation (Y) est agencé pour coïncider avec ladite seconde partie de la trajectoire de chargement (P) dans des périodes de temps de fonctionnement différentes et/ou dans une condition d'absence de produit alimentaire, et
**en ce que** :
le dispositif de chargement (20) comprend une structure de support (24) pour supporter le cône de remplissage (14) et dans lequel le dispositif de torsion (18) est positionné entre la structure de support (24) et le cône de remplissage (14), dans lequel, dans ladite position coudée, le cône de remplissage (14) est déplacé conjointement avec ledit dispositif de torsion (18) et ladite structure de support (24).

2. Appareil de torsion (10) selon la revendication 1, dans lequel, dans ladite position coudée, lorsque l'appareil (10) est observé selon une vue en plan ou à partir d'une zone supérieure, le cône de remplissage (14) est déplacé de manière angulaire autour dudit axe de rotation (Y) vers un côté, par rapport audit dispositif de freinage (12) ou par rapport à ladite au moins une partie de la trajectoire de chargement (P).

3. Appareil de torsion selon l'une des revendications précédentes, dans lequel ledit cône de remplissage (14) est adapté pour adopter, en plus de ladite première position opérationnelle et de ladite position coudée, une seconde position opérationnelle dans laquelle ledit cône de remplissage (14) est dans une position linéairement rétractée par rapport au dispositif de freinage (12), ladite seconde position opérationnelle étant intermédiaire entre ladite première position opérationnelle et ladite position coudée.

4. Appareil de torsion (10) selon l'une quelconque des revendications précédentes, dans lequel la structure de support (24) comprend une partie de pivot (26), ladite partie de pivot (26) étant agencée pour tourner autour dudit axe de rotation (Y) dans un siège rotatif (27) d'une base de support (28).

5. Appareil de torsion (10) selon la revendication 4, dans lequel un conduit d'entrée (31) est en communication avec une cavité interne (25) de la structure de support (24), et se met en prise avec la structure de support (24) de manière coaxiale avec l'axe de rotation (Y).

6. Appareil de torsion (10) selon la revendication 5, dans lequel le conduit d'entrée (31) se met en prise dans une zone inférieure ou par dessous, par rapport à la structure de support (24).

7. Appareil de torsion (10) selon la revendication 6, dans lequel le conduit d'entrée (31) est en forme de coude avec la bouche d'entrée (33) agencée sur un axe horizontal et la bouche de sortie (34) agencée sur un axe vertical, ladite bouche de sortie (34) étant adaptée pour être placée en communication avec le cône de remplissage (14).

8. Appareil de torsion (10) selon la revendication 7, dans lequel le dispositif de chargement (20) comprend une conduite de passage (22) placée en communication de fluide entre le cône de remplissage (14) et la structure de support (24), dans lequel, lorsque le cône de remplissage (14) est dans la première position, une bouche d'entrée (36) de la conduite de passage (22) est alignée le long d'un axe avec la bouche de sortie (34) du conduit d'entrée (31), ledit axe coïncidant avec l'axe de rotation (Y).

9. Appareil de torsion (10) selon l'une quelconque des revendications précédentes, dans lequel ladite trajectoire de chargement (P) est au moins partiellement de forme sinusoïdale, dans lequel une partie de la trajectoire de chargement (P) est positionnée le long d'un premier axe de chargement et dans lequel une autre partie de la trajectoire de chargement (P) est positionnée sur un second axe de chargement, ledit second axe de chargement coïncidant avec l'axe de rotation (Y) du cône de remplissage (14).

10. Procédé de torsion (10) via un dispositif de chargement (20) prévu pour charger un produit alimentaire dans un boyau (21), dans lequel le produit alimentaire se déplace le long d'une trajectoire de chargement (P), du dispositif de chargement (20) à un dispositif de freinage (12) conçu pour supporter le boyau (21), dans lequel le dispositif de chargement (20) comprend un corps de remplissage tubulaire ou cône de remplissage (14), prévu pour supporter le boyau (21), une structure de support (24) pour supporter le cône de remplissage (14) et un dispositif de torsion (18) prévu pour faire tourner ledit cône de remplissage (14) et positionné entre la structure de support (24) et le cône de remplissage (14), dans lequel :
dans une première étape de remplissage opérationnelle, le cône de remplissage (14) est raccordé au dispositif de freinage (12) afin de charger le produit alimentaire dans le boyau, dans lequel, dans ladite première étape opérationnelle, le produit alimentaire passe le long d'un axe de chargement (Y) ; et
dans lequel, dans une autre étape opérationnelle, le cône de remplissage (14), ledit dispositif de torsion (18) et ladite structure de support (24) sont déplacés de manière angulaire dans une position coudée autour d'un axe de rotation (Y), ladite position étant coudée par rapport au dispositif de freinage (12),
dans lequel ledit axe de rotation (Y) du cône de remplissage (14) coïncide avec ledit axe de chargement (Y).
